# EUROPÄISCHE PATENTSCHRIFT

(11) **EP 3 158 295 B1**
(45) Veröffentlichungstag und Bekanntmachung des Hinweises auf die Patenterteilung: **04.10.2017**
(21) Anmeldenummer: 16701725.0
(22) Anmeldetag: 20.01.2016
(51) Int. Cl.: G01C 21/32

(54) **VERFAHREN ZUR BEREITSTELLUNG VON INFORMATION ÜBER ZUMINDEST EIN OBJEKT IN EINEM UMGEBUNGSBEREICH EINES KRAFTFAHRZEUGS UND SYSTEM**
METHOD FOR PROVIDING INFORMATION ABOUT AT LEAST ONE OBJECT IN A SURROUNDING REGION OF A MOTOR VEHICLE AND SYSTEM
PROCÉDÉ POUR FOURNIR DES INFORMATIONS RELATIVES À AU MOINS UN OBJET DANS UN ENVIRONNEMENT PÉRIPHÉRIQUE D'UN VÉHICULE À MOTEUR ET SYSTÈME

(30) Priorität: 31.01.2015 DE 102015001247
(43) Veröffentlichungstag der Anmeldung: 26.04.2017
(73) Patentinhaber: Audi AG, 85045 Ingolstadt (DE)
(72) Erfinder: SKIBINSKI, Sebastian, 85057 Ingolstadt (DE)
(86) Internationale Anmeldenummer: PCT/EP2016/000091
(87) Internationale Veröffentlichungsnummer: WO 2016/120001

(56) Entgegenhaltungen:
- WO-A1-2010/129192
- WO-A1-2011/047729
- WO-A1-2011/127226
- DE-A1- 10 041 277
- DE-A1-102006 052 482
- US-A1- 2012 068 860

## Beschreibung

Die Erfindung betrifft ein Verfahren zur Bereitstellung von Information über zumindest ein Objekt in einem Umgebungsbereich eines Kraftfahrzeugs einer Fahrzeugflotte, bei dem die Information im Kraftfahrzeug erfasst und zusammen mit Positionsdaten des Kraftfahrzeugs an eine Verkehrsinformations-Sammeleinrichtung übertragen und bereitgestellt wird. Die Erfindung betrifft außerdem ein System mit zumindest einem Kraftfahrzeug einer Fahrzeugflotte und einer Verkehrsinformations-Sammeleinrichtung.

Verfahren zur Bereitstellung von Information über zumindest ein Objekt in einem Umgebungsbereich eines Kraftfahrzeugs einer Fahrzeugflotte sind aus dem Stand der Technik bekannt. So ist in der DE 10 2013 205 392 A1 ein Verfahren beschrieben, bei welchem die Information in Form eines Umfeldmodells mit Informationen einer hochauflösenden, hochgenauen digitalen Karte in einer Datenbank gespeichert wird. Die digitale Landkarte umfasst ein hochgenaues Straßenmodell, welches den Verlauf von Strecken und Fahrspuren beschreibt, und Information über Anzahl und Verlauf von Fahrstreifen, Kurvenradien, Steigungen, Kreuzungen und ähnliche Charakteristiken enthält. Das Umfeldmodell umfasst weitere Informationen über statische Objekte, wie Information über Position und Art von Fahrbahn- und Linienmarkierungen, etwa Haltelinien, Zebrastreifen, Mittelstreifen, Fahrbahnrandmarkierungen und ähnliches, das Vorhandensein von Randbebauungen, sowie deren Klasse und relative oder absolute Position, Information über Position und Art von Verkehrszeichen, oder Information über Position, Art und Zustand von Lichtsignalanlagen oder Wechselverkehrszeichen. Darüber hinaus ist aus der DE10 2013 001 308 A1 ein Verfahren und eine Navigationsvorrichtung zum Bereitstellen von Informationen über einen Parkplatz bekannt. Schließlich offenbart die DE 10 2009 008 745 A1 ein Verfahren und ein System zur automatischen Verkehrsführung.

Das Dokument DE 100 41 277 A1 offenbart ein Verfahren zum Erweitern von geografischen Datenbanken durch Verwendung von unkoordinierten Messdaten. Dazu befahren eine Vielzahl von Messfahrzeugen ein bestimmtes Gebiet. Die Messfahrzeuge sind mit einem Positionsbestimmungssystem ausgerüstet und sammeln beim Bewegen in dem Gebiet spezifische geospatiale Informationen. Diese spezifischen Informationen von den Messfahrzeugen werden über der Zeit zu einem Datensatz kombiniert. Ein Zentralprozessor analysiert den Datensatz zur Bestimmung von geospatialen Informationen höherer Qualität als die von den einzelnen Messfahrzeugen in diesem Gebiet gesammelten Informationen. Die Messfahrzeuge liefern also geografische Längen- und Breiteninformationen durch sogenannte "Roh-Positionsmessungen". Mit einer Kommunikationseinheit kann zu einem Zentralrechner eine Kommunikation aufgebaut werden. Aus den gesammelten GPS-Daten der Messfahrzeuge werden dann virtuelle Mittellinien und Versatzwerte berechnet. Die Messfahrzeuge liefern also nur GPS-Daten über die eigene Position an einen Zentralrechner. Der Zentralrechner verwertet diese Informationen weiter.

Nachteilig an dem genannten Stand der Technik ist, dass die Information durch das Umfeldmodell nur trivial modelliert wird.

Es ist Aufgabe der Erfindung, ein Verfahren sowie ein System bereitzustellen, mit welchem beziehungsweise bei welchem die Information über das zumindest eine Objekt in dem Umgebungsbereich des Kraftfahrzeugs effektiv durch eine Verkehrsinformations-Sammeleinrichtung bereitgestellt werden kann.

Diese Aufgabe wird erfindungsgemäß durch ein Verfahren sowie durch ein System mit den Merkmalen gemäß den jeweiligen unabhängigen Ansprüchen gelöst.

Bei einem erfindungsgemäßen Verfahren wird Information über zumindest ein Objekt in einem Umgebungsbereich eines Kraftfahrzeugs einer Fahrzeugflotte bereitgestellt. Die Information wird im Kraftfahrzeug erfasst und zusammen mit Positionsdaten des Kraftfahrzeugs an eine Verkehrsinformations-Sammeleinrichtung übertragen und durch die Verkehrsinformations-Sammeleinrichtung bereitgestellt. Ein wesentlicher Gedanke der Erfindung ist, dass die Information mit zumindest einer ersten geographischen Position des Objekts und einer zweiten geographischen Position des Objekts bereitgestellt wird, und die zweite geographische Position abhängig von der ersten geographischen Position bestimmt und bereitgestellt wird.

Durch das erfindungsgemäße Verfahren wird es möglich, die Information über das Objekt in dem Umgebungsbereich effektiv bereitzustellen.

Möglich wird das, weil die zweite geographische Position abhängig von der ersten geographischen Position bestimmt wird. Das bedeutet, dass die zweite geographische Position angepasst wird, falls sich die erste geographische Position ändert. Die erste geographische Position und die zweite geographische Position können beispielsweise als Geokoordinate ausgebildet sein. Die Geokoordinate kann beispielsweise eine Position in einem erdfesten Koordinatensystem wie einem UTM-Koordinatensystem (Universal Transverse Mercator) beschreiben. Die Verkehrsinformations-Sammeleinrichtung umfasst vorzugsweise eine Datenbank. Die erste geographische Position ist insbesondere ein Primärattribut, während die zweite geographische Position insbesondere ein Sekundärattribut ist. So wird das Sekundärattribut beispielsweise angepasst, falls sich das Primärattribut ändert. Das Objekt ist insbesondere eine komplexe Landmarke, wie beispielsweise ein Kreisverkehr. Die komplexe Landmarke umfasst punktgenaue beziehungsweise punktförmige Landmarken, wie beispielsweise die erste geographische Position und/oder die zweite geographische Position. Insbesondere wird das Objekt mit einem Graphen parametrisch beschrieben. Das bedeutet, die Information über das Objekt wird durch den Graphen modelliert. Die parametrische Beschreibung des Objekts umfasst Attribute beziehungsweise Parameter, wie beispielsweise die erste geographische Position und die zweite geographische Position. Die Attribute werden durch die Information bereitgestellt und mittels des Graphen modelliert beziehungsweise zusammenhängend beschrieben. Der Graph ist in der Graphentheorie eine abstrakte Struktur, die eine Menge von Attributen zusammen mit den zwischen diesen Attributen bestehenden Verbindungen repräsentiert. Die mathematischen Abstraktionen der Attribute werden dabei Knoten des Graphen genannt. Die paarweisen Verbindungen zwischen Knoten heißen Kanten. Die Kanten können gerichtet oder ungerichtet sein. Vorliegend wird vorzugsweise ein kreisfreier gerichteter Graph genutzt, um die Information zu beschreiben beziehungsweise die Attribute der Information des Objekts miteinander verknüpft beziehungsweise abhängig voneinander bereitzustellen. Die Attribute, wie die erste geographische Position und die zweite geographische Position, werden durch die Knoten des Graphen repräsentiert. Die Kanten des Graphen zeigen somit insbesondere eine Korrelation der an die jeweiligen Kanten angebundenen Attribute. So ist die erste geographische Position insbesondere ein Startknoten des Graphen, während ein Sekundärattribut, wie beispielsweise die zweite geographische Position ein Zielknoten des Graphen ist. Der Graph weist insbesondere keine Zyklen auf.

Es ist insbesondere mehr beabsichtigt, als lediglich absolute und relative Koordinaten bereitzustellen. Durch den Graphen kann eine effektivere Verwaltung der Information und eine effektivere Bereitstellung der Information erfolgen, als wenn die erste geographische Position lediglich absolut angegeben ist und die zweite geographische Position lediglich relativ zu der ersten geographischen Position angegeben ist. Durch den Graphen kann ein funktioneller Zusammenhang, in Form eines mathematischen Modells, zwischen der ersten geographischen Position und der zweiten geographischen Position beschrieben werden. Somit kann durch den Graphen eine effektive und komplexe Korrelation zwischen der ersten geographischen Position und der zweiten geographischen Position beschrieben werden.

So kann das Objekt beispielsweise als ein Kreisverkehr in dem Umgebungsbereich ausgebildet sein. Die erste geographische Position kann dann beispielsweise ein Mittelpunkt des Kreisverkehrs sein. Die zweite geographische Position kann dann beispielsweise ein Hilfspunkt sein, welcher für die Konstruktion eines Teils des Kreisverkehrs benötigt wird. Ändert sich also die erste geographische Position, so ändert sich insbesondere auch die zweite geographische Position abhängig von dem der Abhängigkeit zugrundeliegenden Graphen beziehungsweise mathematischen Modells.

Vorzugsweise ist vorgesehen, dass die erste geographische Position unabhängig von der zweiten geographischen Position bestimmt wird. Somit hängt die erste geographische Position also insbesondere nicht von der zweiten geographischen Position ab. Es ist also insbesondere vorgesehen, dass die erste geographische Position geändert wird und somit die zweite geographische Position angepasst wird. Ferner ist es insbesondere nicht vorgesehen, dass die zweite geographische Position geändert wird und dadurch die erste geographische Position angepasst wird. Dies entspricht insbesondere dem Modell des gerichteten Graphen. Durch den gerichteten Graphen wird eine Richtung vorgegeben, in welcher die Knoten des Graphen durchlaufen werden können. Vorteilhaft ist also eine effektive und fehlereinflussreduzierte Bereitstellung der Information durch den gerichteten Graphen.

Weiterhin ist vorzugsweise vorgesehen, dass die Information mit einer dritten geographischen Position bereitgestellt wird, und die dritte geographische Position abhängig von der ersten geographischen Position bestimmt wird. Die dritte geographische Position ist insbesondere analog zu der zweiten geographischen Position ebenfalls vorzugsweise ein Sekundärattribut, welches von dem Primärattribut, insbesondere der ersten geographischen Position, abhängt. Vorteilhaft ist also, dass die Modellierung der Information besonders vielfältig möglich ist und mit der zweiten geographischen Position und der dritten geographischen Position mehrere Sekundärattribute von dem Primärattribut abhängen können. Die Beschreibung des Objekts beziehungsweise die Modellierung der Information des Objekts kann somit vielfältig erfolgen und die Information kann effektiv durch insbesondere die Verkehrsinformations-Sammeleinrichtung bereitgestellt werden.

In einer Ausführungsform ist es vorzugsweise vorgesehen, dass die erste geographische Position durch einen Mittelpunkt des Objekts beschrieben wird. Ebenso kann die erste geographische Position beispielsweise durch einen Schwerpunkt des Objekts beschrieben werden. Insbesondere ist vorgesehen, dass die erste geographische Position durch den Mittelpunkt eindeutig zuzuordnen ist. Somit kann die Anordnung des Objekts in beispielsweise einem erdfesten Koordinatensystem präzise erfolgen. Der Mittelpunkt des Objekts kann sich beispielsweise aber auch auf Mittelpunkte von Teilobjekten des Objekts beziehen. Insbesondere ist jedoch vorgesehen, dass der Mittelpunkt ein eindeutig zuordenbarer Referenzpunkt des Objekts ist.

In einer weiteren Ausführungsform ist es vorzugsweise vorgesehen, dass durch die zweite geographische Position ein Hilfspunkt für die Konstruktion eines Teilobjekts des Objekts beschrieben wird. So kann der Hilfspunkt beispielsweise genutzt werden, um eine vollständige Geometrie, wie beispielsweise komplexe Konturen von Teilobjekten des Objekts zu beschreiben. So ist ein Kreis beispielsweise durch den Mittelpunkt des Kreises und einen Radius definiert. Wird die geometrische Form des Objekts jedoch komplexer, so wird für die Konstruktion des komplexen Objekts üblicherweise auf Hilfspunkte zurückgegriffen. Die komplexen Erweiterungen des Objekts werden vorliegend beispielsweise als die Teilobjekte beschrieben. So kann das Objekt beispielsweise als Kreisverkehr vorliegen und das Teilobjekt kann beispielsweise eine Auffahrt des Kreisverkehrs sein. Der Vorteil des Hilfspunkts ist also, dass komplexere Objekte beschrieben und somit letztendlich eindeutig konstruiert werden können.

In einer weiteren Ausführungsform kann es vorgesehen sein, dass durch den Hilfspunkt ein Radius eines Konturbereichs des Teilobjekts beschrieben wird. So kann der Hilfspunkt beispielsweise angeben, von welcher Position aus der Radius des Konturbereichs des Teilobjekts konstruiert werden soll. Der Konturverlauf des Teilobjekts kann somit eindeutig definiert werden. Durch das eindeutige Definieren des Teilobjekts kann die Information effektiv bereitgestellt werden.

Insbesondere ist vorgesehen, dass das Objekt als ein kraftfahrzeugexternes Verkehrsinfrastrukturelement, insbesondere als ein Kreisverkehr, in dem Umgebungsbereich beschrieben wird. Das Verkehrsinfrastrukturelement kann beispielsweise als Ampel und/oder Verkehrszeichen und/oder Verkehrsinsel und/oder Kreisverkehr und/oder Kreuzung und/oder Spurmarkierung ausgebildet sein. Vorteilhaft ist also, dass vielfältige Verkehrsinfrastrukturelemente die Information bereitstellen können, welche modelliert, in der Verkehrsinformations-Sammeleinrichtung gespeichert und schließlich effektiv bereitgestellt werden kann.

In einer weiteren Ausführungsform ist es vorzugsweise vorgesehen, dass durch das Teilobjekt eine Auffahrt des Kreisverkehrs und/oder eine Abfahrt des Kreisverkehrs beschrieben wird. Die Auffahrt des Kreisverkehrs ist also beispielsweise der Teil der Fahrbahn des Kreisverkehrs, auf welchem die Fahrzeuge in den Kreisverkehr einfahren. Die Abfahrt des Kreisverkehrs beschreibt somit den Teil der Fahrbahn des Kreisverkehrs, auf welchem die Fahrzeuge von dem Kreisverkehr abfahren. Das Teilobjekt ermöglicht also eine genaue Beschreibung des Objekts und somit ein effektives Bereitstellen der Information.

Weiterhin ist es vorzugsweise vorgesehen, dass der Umgebungsbereich in Teilumgebungsbereiche unterteilt wird, und die Information durch die Verkehrsinformations-Sammeleinrichtung abhängig von den Teilumgebungsbereichen bereitgestellt wird. Hierdurch kann ein Verfahren mit eingeschränkter Lokalität bereitgestellt werden. Das bedeutet insbesondere, dass die Information nur für einen Teilbereich des Objekts bereitgestellt wird, und beispielsweise angrenzende Teilbereiche genutzt werden, um die Information, welche von dem Objekt innerhalb des Teilbereichs bereitgestellt wird, anzupassen. Die Unterteilung der Teilbereiche des Objekts erfolgt insbesondere durch die Teilumgebungsbereiche. So kann beispielsweise ein Raster auf der Erdoberfläche angelegt werden, wobei jeder der Teilumgebungsbereiche einem Feld des Rasters entspricht. Vorteilhaft an der Unterteilung des Umgebungsbereichs in Teilumgebungsbereiche ist die Reduzierung der Datenmenge für das Verarbeiten der Information in der Verkehrsinformations-Sammeleinrichtung. Somit kann die Information in der Verkehrsinformations-Sammeleinrichtung effektiver verarbeitet werden und effektiver bereitgestellt werden. Vorzugsweise werden die Teilumgebungsbereiche, welche für das Bereitstellen der Information genutzt werden, anhand einer Achternachbarschaft bestimmt. Das bedeutet, dass beispielsweise ein viereckiger Teilumgebungsbereich zusammen mit seinen acht nachbarschaftlich angrenzenden viereckigen Teilumgebungsbereichen bearbeitet wird.

Die Erfindung betrifft auch ein System mit zumindest einem Kraftfahrzeug einer Fahrzeugflotte und einer Verkehrsinformations-Sammeleinrichtung, wobei das System dazu ausgelegt ist, ein erfindungsgemäßes Verfahren oder eine vorteilhafte Ausführung davon auszuführen.

Die mit Bezug auf das erfindungsgemäße Verfahren vorgestellten bevorzugten Ausführungsformen und deren Vorteile geltend entsprechend für das erfindungsgemäße System.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder aber in Alleinstellung verwendbar, ohne den Rahmen der Erfindung zu verlassen. Es sind somit auch Ausführungen von der Erfindung als umfasst und offenbart anzusehen, die in der Figur nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Ausführungsbeispiele der Erfindung werden nachfolgend anhand schematischer Zeichnungen näher erläutert.

Dabei zeigen:
- Fig. 1: eine schematische Darstellung eines erfindungsgemäßen Systems mit einer Verkehrsinformations-Sammeleinrichtung und einem Kraftfahrzeug;
- Fig. 2: eine schematische Darstellung eines Kreisverkehrs in einem Umgebungsbereich des Kraftfahrzeugs; und
- Fig. 3: eine schematische Darstellung von Teilbereichen des Umgebungsbereichs.

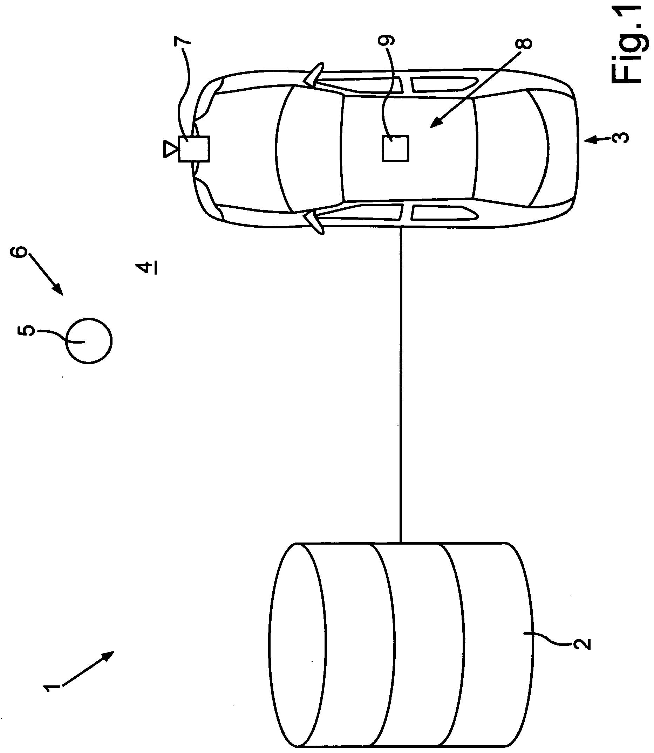

In Fig. 1 ist schematisch ein System 1 dargestellt. Das System 1 umfasst in dem Ausführungsbeispiel eine Verkehrsinformations-Sammeleinrichtung 2 und ein Kraftfahrzeug 3. In einem Umgebungsbereich 4 des Kraftfahrzeugs 3 ist ein Objekt 5 angeordnet. Die Verkehrsinformations-Sammeleinrichtung 2 liegt insbesondere als externer Server mit einer Datenbank vor. Das Kraftfahrzeug 3 ist insbesondere Bestandteil einer Fahrzeugflotte, welche eine Vielzahl von Kraftfahrzeugen 3 umfasst.

Eine Information 6 über das Objekt 5, nämlich die weiter unten beschriebene zweite geographische Position 12, wird durch einen kraftfahrzeugseitigen Sensor 7 des Kraftfahrzeugs 3 erfasst. Positionsdaten 8 des Kraftfahrzeugs 3 können beispielsweise mit einem Empfänger 9 des Kraftfahrzeugs 3 bestimmt werden.

So wird gemäß Fig. 1 die Information 6 von dem Objekt 5 mittels des kraftfahrzeugseitigen Sensors 7 erfasst und von dem Kraftfahrzeug 3, insbesondere drahtlos, an die Verkehrsinformations-Sammeleinrichtung 2 übertragen. Durch die Verkehrsinformations-Sammeleinrichtung 2 kann die Information 6 auch wieder für beispielsweise einzelne Fahrzeuge der Fahrzeugflotte bereitgestellt werden. Durch die Information 6 kann beispielsweise in der Verkehrsinformations-Sammeleinrichtung 2 eine Karte, beispielsweise eine Großarealumfeldkarte, des Umgebungsbereichs 4 bestimmt werden und/oder angepasst werden.

Der kraftfahrzeugseitige Sensor 7 kann beispielsweise als Kamerasystem und/oder Radarsystem und/oder Laserscanner und/oder Lidar und/oder Ultraschallsensor ausgebildet sein. Der Empfänger 9 ist vorzugsweise ein GNSS-Empfänger (Global Navigation Satellite System), welcher eine absolute Position in einem erdfesten Koordinatensystem von dem Kraftfahrzeug 3 bestimmen kann. Somit kann beispielsweise auch eine Fahrtrajektorie des Kraftfahrzeugs 3 bestimmt werden.

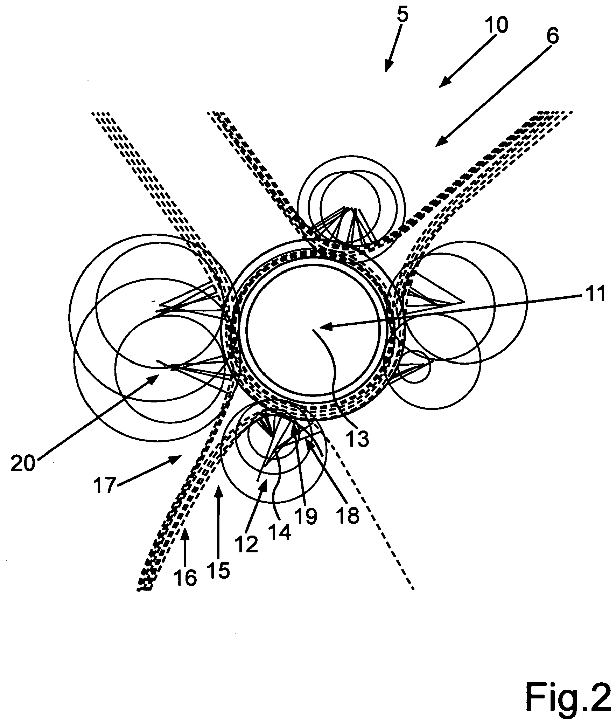

Fig. 2 zeigt als das Objekt 5 einen Kreisverkehr 10. Von dem Kreisverkehr 10 wird die Information 6 bereitgestellt. Die Information 6 über den Kreisverkehr 10 umfasst eine erste geographische Position 11 und eine zweite geographische Position 12. Die erste geographische Position 11 ist gemäß dem Ausführungsbeispiel als ein Mittelpunkt 13 des Kreisverkehrs 10 ausgebildet. Die zweite geographische Position 12 ist gemäß dem Ausführungsbeispiel als ein Hilfspunkt 14 ausgebildet. Der Hilfspunkt 14 ist vorzugsweise für die Konstruktion eines Teilobjekts 15 des Objekts 5 vorgesehen. Gemäß Fig. 2 ist das Teilobjekt 15 als eine Auffahrt 16 des Kreisverkehrs 10 und/oder eine Abfahrt 17 des Kreisverkehrs 10 ausgebildet. Abhängig von dem Hilfspunkt 14 kann nun beispielsweise ein Radius 18 eines Konturbereichs 19 des Teilobjekts 15 beschrieben werden. Die Information 6 wird nun in der Verkehrsinformations-Sammeleinrichtung 2 folgendermaßen bereitgestellt. Die zweite geographische Position 12 wird abhängig von der ersten geographischen Position 11 bereitgestellt. Das bedeutet beispielsweise, dass die zweite geographische Position dann angepasst wird, wenn die erste geographische Position geändert wird. So wird beispielsweise der Mittelpunkt 13 des Kreisverkehrs 10 erfasst und in der Verkehrsinformations-Sammeleinrichtung abgespeichert. Weiterhin wird der Hilfspunkt 14 erfasst und ebenfalls in der Verkehrsinformations-Sammeleinrichtung 2 abgespeichert. Das Abspeichern erfolgt insbesondere derart, dass der Hilfspunkt 14 beziehungsweise die zweite geographische Position beziehungsweise die Geokoordinate des Hilfspunkts 14 abhängig von dem Mittelpunkt 13 abgespeichert und bereitgestellt wird.

Die Abhängigkeit der zweiten geographischen Position 12 von der ersten geographischen Position 11 wird insbesondere mittels eines kreisfreien gerichteten Graphen bereitgestellt. Durch den kreisfreien gerichteten Graphen kann die Information 6 in der Verkehrsinformations-Sammeleinrichtung 2 derart modelliert werden, dass bei einer Änderung der ersten geographischen Position 11 ein Anpassen der zweiten geographischen Position 12 erfolgt. Der Graph umfasst dabei Knoten und Kanten. Die Kanten verbinden die Knoten. Die erste geographische Position 11 und die zweite geographische Position 12 können als Attribute bezeichnet werden. Die erste geographische Position 11 ist dann beispielsweise ein Primärattribut, während die zweite geographische Position 12 ein Sekundärattribut ist. Die Knoten des Graphen werden durch die Attribute der Information 6 repräsentiert. Die Verbindung, welche eine mathematische Funktion für die Korrelation zwischen den Attributen beschreibt, wird durch die Kanten modelliert.

Ein Startknoten des Graphen wird insbesondere durch das Primärattribut repräsentiert, während ein Zielknoten des Graphen durch ein Sekundärattribut der Attribute repräsentiert wird. Somit kann eine kreisfreie beziehungsweise zyklenfreie und gerichtete Abhängigkeit von Attributen, wie beispielsweise der ersten geographischen Position 11 und/oder der zweiten geographischen Position 12, der Information 6 modelliert werden. Die Information 6 kann dadurch in der Verkehrsinformations-Sammeleinrichtung 2 effektiv verwaltet beziehungsweise gepflegt und von der Verkehrsinformations-Sammeleinrichtung 2 effektiv bereitgestellt werden.

Gemäß Fig. 2 umfasst die Information 6 auch eine dritte geographische Position 20. Die dritte geographische Position 20 wird gemäß dem Ausführungsbeispiel analog zu der zweiten geographischen Position 12 als Sekundärattribut beschrieben. Somit wird die dritte geographische Position 20, welche beispielsweise vorliegend ebenfalls als einer der Hilfspunkte 14 beschrieben wird, auch abhängig von der ersten geographischen Position 11 bestimmt. Die dritte geographische Position 20 kann von der zweiten geographischen Position 12 abhängen. Alternativ kann die zweite geographische Position 12 von der dritten geographischen Position 20 abhängen. Die dritte geographische Position 20 kann aber ebenso unabhängig von der zweiten geographischen Position 12 sein.

Gemäß dem Ausführungsbeispiel werden die Attribute der Information 6 fusioniert. Die Fusion erfolgt mittels eines Fusionsalgorithmus. Durch den Fusionsalgorithmus kann eine adaptive Segmentierung der Fahrzeugflottendaten beziehungsweise der Information 6 bezüglich eines festen Bezugssystems, also beispielsweise des erdfesten Bezugssystems, durchgeführt werden. Durch die Wahl eines inkrementellen Fusionsalgorithmus, beispielsweise eines Kalmann-Filters, kann der Fusionsalgorithmus inkrementell ausgebildet werden. Ergänzend oder alternativ kann der Fusionsalgorithmus allerdings auch als nicht-inkrementeller Algorithmus ausgebildet sein, wie dies beispielsweise bei der Verwendung einer inkrementellen Faktorisierung zur Lösung eines linearen Gleichungssystems der Fall ist. Bei dem Fusionsalgorithmus wird die Korrelation zwischen den Attributen mittels der Kanten des Graphen realisiert. Hier sind beispielsweise die Sekundärattribute mit dem Primärattribut korreliert. Ebenso ist eine Korrelation zwischen den Sekundärattributen möglich. Wie bereits erwähnt, wird die Korrelation der Attribute der Information 6, welche die zu fusionierenden Landmarken umfasst, mittels eines kreisfreien gerichteten Graphen modelliert. Mittels rekursiver Verrechnung können die Korrelationen in dem verwendeten Fusionsalgorithmus berücksichtigt werden.

Weiterhin kann durch den kreisfreien gerichteten Graphen eine Berücksichtigung von dynamisch vielen Sekundärattributen für jedes Objekt 5 beziehungsweise jede Landmarke erfolgen. So kann beispielsweise bei dem Kreisverkehr 10 eine beliebige Anzahl von Auffahrten 16 und/oder Abfahrten 17 beziehungsweise Einfahrten und Ausfahrten beschrieben werden. So kann die Anzahl von Sekundärattributen dynamisch sein, weil beispielsweise nicht alle Ein- und Ausfahrten des Kreisverkehrs 10 von dem Kraftfahrzeug 3 aus erfasst werden können.

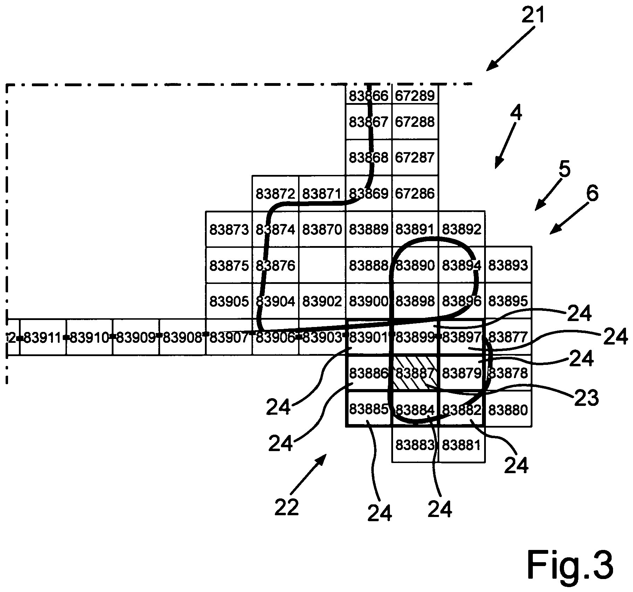

Fig. 3 zeigt eine Karte 21, welche abhängig von der Information 6 erzeugt und/oder angepasst und/oder überprüft werden kann. Die Karte 21 zeigt den Umgebungsbereich 4, welcher gemäß dem Ausführungsbeispiel in Teilumgebungsbereiche 22 unterteilt ist. So wird die Information 6 vorliegend von einem Hauptteilumgebungsbereich 23 bereitgestellt. Die Information 6 des Hauptteilumgebungsbereichs 23 wird abhängig von Nachbarteilumgebungsbereichen 24 des Hauptteilumgebungsbereichs 23 durchgeführt. Die Nachbarteilumgebungsbereiche 24 sind in einer Achternachbarschaft um den Hauptteilumgebungsbereich 23 angeordnet.

Durch das Unterteilen des Umgebungsbereichs 4 in die Teilumgebungsbereiche 22 können kleinere Datenmengen der Information 6 bereitgestellt werden und eine Verarbeitung der Information 6 erfolgt effektiver und zeitlich schneller, als wenn die Information 6 der gesamten Karte 21 und/oder des gesamten Umgebungsbereichs 4 verarbeitet beziehungsweise bereitgestellt wird. Durch das Unterteilen der Karte 21 in die Teilumgebungsbereiche 22 kann das Verfahren mit eingeschränkter Lokalität durchgeführt werden. Es können dadurch also große Datenmengen, welche durch die Information 6 anfallen, in der Verkehrsinformations-Sammeleinrichtung 2 effektiv verarbeitet werden.

Die adaptive Unterteilung von Arealen beziehungsweise des Umgebungsbereichs 4 in Subareale beziehungsweise in Teilumgebungsbereiche 22 kann als ein Vorverarbeitungsschritt angewendet werden und ermöglicht beispielsweise das Aufteilen eines großen Optimierungsproblems. Das große Optimierungsproblem beschreibt insbesondere die Fusion kollektiver Fahrzeugflottendaten beziehungsweise der Information 6. Durch die adaptive Unterteilung wird das große Optimierungsproblem in einfachere Subprobleme mit beschränkter Lokalität unterteilt und kann effektiver gelöst werden. Die Lösung des großen Optimierungsproblems kann beispielsweise online, also zeitnahe, insbesondere zeitgleich, zum Erfassen der Information 6, mit beispielsweise einem Kalmanfilter und/oder offline, also in einem Nachprozessierungsschritt nach dem Erfassen der Information 6, mit beispielsweise einer Spielart der Ansätze der kleinsten Quadrate erfolgen. Zudem kann ein Offline-Verfahren beispielsweise mit einem hybriden Ansatz inkrementell ausgeführt werden. Bei dem hybriden Verfahren kann beispielsweise die Lösung eines linearisierten Gleichungssystems mittels einer QR-Faktorisierung offline erfolgen und zudem mittels einer inkrementellen QR-Faktorisierung online erfolgen. So werden bei der inkrementellen QR-Faktorisierung beispielsweise neu hinzugekommene Gleichungen nur anteilig aktualisiert.

Durch die adaptive Unterteilung wird insbesondere eine parallele Verarbeitung und dadurch eine effektivere Verarbeitung der Information 6 erreicht.

## Patentansprüche

1. Verfahren zur Bereitstellung von Information (6) über zumindest ein Objekt (5) in einem Umgebungsbereich (4) eines Kraftfahrzeugs (3) einer Fahrzeugflotte, bei dem die Information (6) im Kraftfahrzeug (3) erfasst und zusammen mit Positionsdaten (8) des Kraftfahrzeugs (3) an eine Verkehrsinformations-Sammeleinrichtung (2) übertragen und bereitgestellt wird,
**dadurch gekennzeichnet, dass**
die Information (6) mit zumindest einer ersten geographischen Position (11) des Objekts (5) und einer zweiten geographischen Position (12) des Objekts (5) durch das Kraftfahrzeug bereitgestellt wird, und die zweite geographische Position (12) abhängig von der ersten geographischen Position (11) durch einen kraftfahrzeugseitigen Sensor bestimmt und bereitgestellt wird.

2. Verfahren nach Anspruch 1,
**dadurch gekennzeichnet, dass**
die erste geographische Position (11) unabhängig von der zweiten geographischen Position (12) bestimmt wird.

3. Verfahren nach Anspruch 1 oder 2,
**dadurch gekennzeichnet, dass**
die Information (6) mit einer dritten geographischen Position (20) bereitgestellt wird, und die dritte geographische Position (20) abhängig von der ersten geographischen Position (11) bestimmt wird.

4. Verfahren nach einem der vorhergehenden Ansprüche,
**dadurch gekennzeichnet, dass**
die erste geographische Position (11) durch einen Mittelpunkt (13) des Objekts (5) beschrieben wird.

5. Verfahren nach einem der vorhergehenden Ansprüche,
**dadurch gekennzeichnet, dass**
durch die zweite geographische Position (12) ein Hilfspunkt (14) für die Konstruktion eines Teilobjektes (15) des Objekts (5) beschrieben wird.

6. Verfahren nach Anspruch 5,
**dadurch gekennzeichnet, dass**
durch den.Hilfspunkt (14) ein Radius (18) eines Konturbereichs (19) des Teilobjektes (15) beschrieben wird.

7. Verfahren nach einem der vorhergehenden Ansprüche,
**dadurch gekennzeichnet, dass**
das Objekt (5) als ein kraftfahrzeugexternes Verkehrsinfrastrukturelement, insbesondere als ein Kreisverkehr (10), in dem Umgebungsbereich (4) beschrieben wird.

8. Verfahren nach Anspruch 5 oder 6 und 7,
**dadurch gekennzeichnet, dass**
durch das Teilobjekt (15) eine Auffahrt (16) des Kreisverkehrs (10) und/oder eine Abfahrt (17) des Kreisverkehrs (10) beschrieben wird.

9. Verfahren nach einem der vorhergehenden Ansprüche,
**dadurch gekennzeichnet, dass**
der Umgebungsbereich (4) in Teilumgebungsbereiche (22) unterteilt wird, und die Information (6) durch die Verkehrsinformations-Sammeleinrichtung (2) abhängig von den Teilumgebungsbereichen (22) bereitgestellt wird.

10. System (1) mit einer Verkehrinformations-Sammeleinrichtung (2) und einem Kraftfahrzeug (3) einer Fahrzeugflotte, wobei das System (1) dazu ausgebildet ist ein Verfahren nach einem der vorhergehenden Ansprüche durchzuführen.

## Claims

1. Method for providing information (6) about at least one object (5) in a surrounding area (4) of a motor vehicle (3) of a vehicle fleet, wherein the information (6) is recorded in the motor vehicle (3) and transferred to a traffic information collection device (2) together with position data (8) of the motor vehicle (3) and provided,
**characterised in that**
the information (6) is provided by the motor vehicle with at least one first geographic position (11) of the object (5) and one second geographic position (12) of the object (5), and the second geographic position (12) is determined by a sensor on the motor vehicle depending on the first geographic position (11) and provided.

2. Method according to claim 1,
**characterised in that**
the first geographic position (11) is determined independent of the second geographic position (12).

3. Method according to claim 1 or 2,
**characterised in that**
the information (6) is provided with a third geographic position (20), and the third geographic position (20) is determined depending on the first geographic position (11).

4. Method according to any of the preceding claims,
**characterised in that**
the first geographic position (11) is described by a center point (13) of the object (5).

5. Method according to any of the preceding claims,
**characterised in that**
an auxiliary point (14) is described by the second geographic position (12) for the construction of a partial object (15) of the object (5).

6. Method according to claim 5,
**characterised in that**
a radius (18) of a contour area (19) of the partial object (15) is described by the auxiliary point (14).

7. Method according to any of the preceding claims,
**characterised in that**
the object (5) is described as a traffic infrastructure element outside the motor vehicle, in particular as a roundabout (10), in the surrounding area (4).

8. Method according to claim 5 or 6 and 7,
**characterised in that**
a slip road (16) to the roundabout (10) and/or an exit (17) of the roundabout (10) is described by the partial object (15).

9. Method according to any of the preceding claims,
**characterised in that**
the surrounding area (4) is divided into partial surrounding areas (22), and the information (6) is provided by the traffic information collection device (2) depending on the partial surrounding areas (22).

10. System (1) with a traffic information collection device (2) and a motor vehicle (3) of a vehicle fleet, wherein the system (1) is configured to carry out a method according to any of the preceding claims.

## Revendications

1. Procédé servant à fournir des informations (6) concernant au moins un objet (5) dans une zone environnante (4) d'un véhicule automobile (3) d'une flotte de véhicules, dans lequel les informations (6) sont détectées dans le véhicule automobile (3) et sont transmises et fournies, conjointement avec des données de position (8) du véhicule automobile (3), à un dispositif de collecte d'informations sur le trafic (2),
**caractérisé en ce que**
les informations (6) sont fournies par le véhicule automobile avec au moins une première position géographique (11) de l'objet (5) et une deuxième position géographique (12) de l'objet (5), et la deuxième position géographique (12) est définie et fournie par un capteur situé du côté du véhicule automobile en fonction de la première position géographique (11).

2. Procédé selon la revendication 1,
**caractérisé en ce que**
la première position géographique (11) est définie indépendamment de la deuxième position géographique (12).

3. Procédé selon la revendication 1 ou 2,
**caractérisé en ce que**
les informations (6) sont fournies avec une troisième position géographique (20), et la troisième position géographique (20) est définie en fonction de la première position géographique (11).

4. Procédé selon l'une quelconque des revendications précédentes,
**caractérisé en ce que**
la première position géographique (11) est décrite par un point central (13) de l'objet (5).

5. Procédé selon l'une quelconque des revendications précédentes,
**caractérisé en ce que**
un point auxiliaire (14) pour la structure d'un objet partiel (15) de l'objet (5) est décrit par la deuxième position géographique (12).

6. Procédé selon la revendication 5,
**caractérisé en ce que**
un rayon (18) d'une zone de contour (19) de l'objet partiel (15) est décrit par le point auxiliaire (14).

7. Procédé selon l'une quelconque des revendications précédentes,
**caractérisé en ce que**
l'objet (5) est décrit sous la forme d'un élément d'infrastructure routière externe au véhicule automobile, en particulier sous la forme d'un carrefour giratoire (10), dans la zone environnante (4).

8. Procédé selon la revendication 5 ou 6 et 7,
**caractérisé en ce que**
une entrée (16) du carrefour giratoire (10) et/ou une sortie (17) du carrefour giratoire (10) sont décrites par l'objet partiel (15).

9. Procédé selon l'une quelconque des revendications précédentes,
**caractérisé en ce que**
la zone environnante (4) est divisée en zones environnantes partielles (22), et les informations (6) sont fournies en fonction des zones environnantes partielles (22) par le dispositif de collecte d'informations sur le trafic (2).

10. Système (1) avec un dispositif de collecte d'informations sur le trafic (2) et un véhicule automobile (3) d'une flotte de véhicules, dans lequel le système (1) est réalisé afin de mettre en oeuvre un procédé selon l'une quelconque des revendications précédentes.
